# EUROPEAN PATENT APPLICATION

(11) **EP 4 826 963 A1**
(43) Date of publication of application: **21.10.2026**
(21) Application number: 25170921.8
(22) Date of filing: 16.04.2025
(51) Int. Cl.: H02K 1/2791, H02K 7/18, H02K 15/03, H02K 15/035

(54) **INSTALLING MAGNET MODULES AT A ROTOR HOUSE**

(71) Applicant: Siemens Gamesa Renewable Energy A/S, 7330 Brande (DK)
(72) Inventor: Azar, Ziad, Sheffield, S10 4ED (GB); Booth, James Kenneth, 7330 Brande (DK); Duke, Alexander, Sheffield, S10 5SN (GB); Li, Xing, 7330 Brande (DK)
(74) Representative: SGRE-Association

(57) **Abstract**

It is described a method of arranging permanent magnet modules (7) at a substantially cylindrical, in particular outer, rotor house (6) of an electrical machine, in particular wind turbine generator, the rotor house (6) extending in an axial direction (3) and in a circumferential direction (2) and comprising axially extending guiding structures (4), to provide plural axial magnet module slots (sa,sb,sc,...) spaced apart in the circumferential direction, the method comprising: inserting the magnet modules (7) successively at the slots (sa,sb,sc,...) in a predetermined order of slots until each slot is occupied with an intended number of magnet modules per slot, wherein the inserting the magnet modules (7) is performed in an axial layer-wise manner or in a slot-wise manner.

## Description

### Field of invention

The present invention relates to a method of arranging permanent magnet modules at a rotor house of an electrical machine, further relates to a method of manufacturing a rotor of an electrical machine and still further relates to a method of manufacturing an electric machine, in particular wind turbine generator.

### Art Background

A rotor of a generator, for example of a wind turbine, nowadays has a considerable increased size. Thereby, assembling the generator bears the risk of rotor deformation during assembly, specifically during magnet module insertion.

EP 2 434 616 A1 discloses a method of determining a magnet arrangement for magnets of a rotor of an electrical machine wherein performance parameters of the electrical machine are identified which are to be adjusted and magnets are arranged relative to a reference magnet according to a calculated arrangement variable.

EP 2 555 393 B1 discloses a magnet loading apparatus having positioning means and transfer means adapted to simultaneously transfer a plurality of magnet pole pieces from the positioning means onto a field of the electrical machine.

It has, however, been observed, that the conventional methods for arranging magnet modules at a rotor house suffer from substantive rotor deformation during assembly. Thus, there may be a need for a method of arranging permanent magnet modules at a rotor house, there may be a need of a method for manufacturing a rotor house and there may further be a need for manufacturing an electrical machine, wherein at least some of the aforementioned problems are mitigated.

### Summary of the Invention

This need may be met by the subject matter according to the independent claims. Advantageous embodiments of the present invention are described by the dependent claims.

According to an embodiment of the present invention it is provided a method of arranging permanent magnet modules at a substantially cylindrical, in particular outer, rotor house of an electrical machine, in particular wind turbine generator, the rotor house extending in an axial direction and in a circumferential direction and comprising axially extending guiding structures, to provide plural axial magnet module slots spaced apart in the circumferential direction, (e.g. the magnet modules being to be arranged at predetermined axial module positions within the slots), the method comprising: inserting the magnet modules successively at the slots in a predetermined order of slots until each slot is occupied with an intended number of magnet modules per slot, wherein the inserting the magnet modules is performed in an axial layer-wise manner or in a slot-wise manner.

Each of the permanent magnet modules may comprise a base such as a substantially rectangular metal plate, a permanent magnet attached to or mounted at the base and also a magnet cover covering the magnet. In particular, all magnet modules to be inserted may be configured to have essentially a same geometry, i.e., extent in the axial direction in the circumferential direction and also radial direction.

An outer rotor house may have the axially extending guiding structures provided at a radially inner portion. The guiding structures may for example comprise holding rails which may have for example substantially a T-shape. Between circumferentially adjacent guiding structures, the respective slots may be formed. During the assembly of the rotor, the permanent magnet modules may be inserted from one axial end of the rotor house. In the completed rotor house having mounted thereon all of the permanent magnet modules, the permanent magnet modules in one slot may substantially be axially immediately adjacent to each other. In other embodiments, there may be spacers axially between adjacent permanent magnet modules.

During the assembly, the magnet modules may be pushed along the slots thereby restricted in movement by the guiding structures such that the insertion direction is substantially axially oriented. A cylinder symmetry axis of the rotor house (which may substantially have cylinder symmetry) may be arranged parallel to or along the axial direction. The magnet modules may be required to be arranged at predetermined axial module positions within the slots.

Per slot there may for example be intended to be inserted five to ten magnet modules or for example between five and twenty magnet modules. The method may for example involve inserting a number of magnet modules in a first slot and then inserting a same or a different number of modules in a next slot which is determined by the predetermined order of slots. The method may also involve defining how many magnet modules are to be inserted in which slot in which order of the slots.

The inventors found, that deformation of the rotor house may be reduced when the modules are inserted according to a particular order of slots and according to a particular number of modules inserted in a respective slot. The number of magnet modules inserted in one slot successively may for example be less than the total number of intended magnet modules per slot. The remaining magnet modules to be inserted to this considered slot may be inserted after several one or more modules have been inserted into another slot (and all remaining slots) as governed by the predetermined order of slots. When the inserting the magnet modules is according to the order of slots and is performed in an axial layer-wise manner or in a slot-wise manner, deformation or in particular deterioration of eccentricity of the rotor house and/or generator may be limited to acceptable tolerances.

According to an embodiment of the present invention, the predetermined order of slots is previously determined such that inserting the magnet modules affects deformation and/or eccentricity of the rotor house and/or generator at most below a threshold, in particular optionally taking into account shape measurement data to change the order of slots to be filled.

The order of slots may be determined based on a physical/mathematical model or a simulation which takes into account the magnetic forces acting during the assembly. Thereby, any deformation or shape change may be monitored by performing one or more measurements, for example optical measurements, to determine the axial shape of rotor house. For example, distances between a reference point and regions within the slots, for example mounting regions or contact regions within the slots at which the magnet modules are supposed to contact, may be measured. Furthermore, those measurement data may be processed in order to determine potential deviations from a design shape of the rotor house.

According to an embodiment of the present invention, the inserting the magnet modules is performed in an axial layer-wise manner, comprising: defining for each of a first axial range and at least one further axial range (of the slots) a predetermined number of one or more magnet module (being smaller than the intended number of magnet modules per slot) to be inserted (at each slot), such that the sum of predetermined number of one or more magnet module for all of the first and the at least one further axial ranges is equal to the intended number of magnet modules per slot;
A) filling the first axial range of each slot in the predetermined order of slots with a first predetermined number of one or more magnet module;
B) filling a further axial range of each slot in the predetermined order with a further predetermined number of one or more magnet module;
C) repeating B) for any remaining axial range (not filled with magnet modules) as the further axial range.

The axial layer-wise manner may be a particular manner which was found by the inventors to limit any potential deformation of the rotor house. Thereby, during the method of this embodiment, at the beginning, the first axial range of all slots is filled or occupied with magnet modules according to the predetermined slot order and thereafter, one or more further axial ranges is inserted or filled with magnet modules again according to the slot order. Thereby, the first axial range may correspond to a sum of an axial extent of one or more magnet modules and also the at least one further axial range may correspond to an axial extent of the sum of one or more magnet modules. Thereby, the insertion of the magnet modules may be performed or completed layer by layer circumferentially.

For example, the full circumferential round for all poles may be completed with one module per pole (or even more modules per pole), followed by a second layer (for example one module per pole for full round) and so on until the total number of modules to be inserted in each slot (for example seven) per pole is completed. By doing so, the unbalanced magnetic forces could be reduced by for example seven times. This embodiment where in each axial range exactly one magnet module is inserted, may, however, require a particular relatively long insertion time. Alternatively, to save assembly time, the process could be speeded up by the insertion of two, three or four modules in the first round circumferentially, where the risk of deformation is lower, i.e., due to better fixation as it is at the drive end, followed by one or two modules in the second round, then one module round till the full insertion is completed. The number of steps may be adapted also during the assembly in order to find for example the optimal combination between minimum time and minimum deformation.

According to an embodiment of the present invention, the predetermined order comprises that a slot immediately adjacent to the last slot previously enriched (with one or more magnet module) is enriched next (with one or more magnet module).

The inventors found that this ordering may limit any potential deformation or may even avoid any deformation and thus substantially maintain the required low eccentricity of the rotor house and/or generator. After for example having inserted one or more modules in a first slot, one or more modules may subsequently be inserted in a slot which is immediately circumferentially adjacent, i.e., the next slot. This process may continue in the same analogous manner until all slots have been inserted with one or more modules in order to complete one axial layer or axial range. The procedure then may continue with the next axial range or axial layer thereby inserting a same number of modules (as in the previous layer) or inserting a different number of modules. This may then continue in an analogous manner for one or more further axial ranges or layers until the intended number of modules have been inserted into all slots.

According to an embodiment of the present invention, the predetermined order comprises that filling a further axial range is started with a same slot with which a previous axial range has been started.

Thereby, the advantage may be provided that the arrangement means, after finishing insertion in the first axial range, just shift to the slot immediately adjacent to the last enriched or filled slot which is circumferentially adjacent to the last slot enriched. Thereby, any insertion means or insertion apparatus does not need to change the circumferential position over a large distance.

According to an embodiment of the present invention, the predetermined order comprises that filling the first axial range is performed starting with a first slot at substantially 0° and continuing with a second slot at substantially 180°, and/or then continues with a next but one relative to the first slot and further continues with a next but one relative to the last enriched slot in an iterative fashion, and/or then continues with a next one relative to the first slot and further continues with a next one relative to the last enriched slot in an iterative fashion.

According to this embodiment, the slots which are subsequently inserted or filled with one or more magnet modules may not be immediately adjacent to each other but may be considerably spaced from each other or may be spaced from each other with one slot in between. The inventors also found that this kind of ordering of the slots also provides or results in low deformation or even absence of any deformation.

According to an embodiment of the present invention, the predetermined order comprises that filling the first axial range is performed starting with a first slot at substantially 0° and continues with a second slot at substantially 180°, and/or then continues with a further slot at one of substantially 90° and 270° and 60° and 120° and 240° and 45° and 90° and 145°.

The exact numbers of angle positions which may be filled subsequently to each other may for example be determined according to physical/mechanical simulations.

According to an embodiment of the present invention, the first and/or the further predetermined number of modules is one or two or three or four (provided that the number of modules to be inserted is lower than the number of missing modules). Thereby, great flexibility is provided and enabling to find an optimum between insertion time and degree of potential deformation.

According to an embodiment of the present invention, the first and each of the at least one further predetermined number of modules is one. This embodiment has been found by the inventors to result in relatively low or even no deformation of the rotor house. However, it may require relatively long insertion time.

The previous embodiments describe alternatives or refinements of an axial layer-wise insertion methodology. In the following, details or alternatives or refinements of a slot-wise insertion methodology are described.

According to an embodiment of the present invention, the inserting the magnet modules is performed in a slot-wise manner, comprising: inserting the intended number of magnet modules per slot into/at a first slot; inserting the intended number of magnet modules per slot into/at a second slot spaced apart substantially 180° from the first slot; inserting the intended number of magnet modules per slot into/at a next but one relative to the first slot and further continuing with a next but one relative to the last enriched slot in an iterative fashion; inserting the intended number of magnet modules per slot into/at a next one relative to the first slot and further continuing with a next one relative to the last enriched slot in an iterative fashion.

According to this embodiment, always any slot is filled with the total intended number of modules to be inserted in the slot and after this, a next slot is filled with magnet modules as specified. The second slot spaced apart substantially 180° (e.g. azimuth angle) from the first slot may be considered as a slot which is substantially geometrically opposite (e.g. with respect to the cylinder axis) to the first slot. The angle values according to which the respective slots are spaced from each other may correspond to circumferential angle values. The method may involve inserting the magnet modules every other slot starting from the first slot and/or starting from the next slot adjacent to the first slot and then inserting magnet modules in every other from that slot which is next from the first slot.

According to an embodiment of the present invention, the magnet modules are inserted such that a magnetic orientation of the magnet modules alternate in the circumferential direction and are same in each slot (in the axial direction). Thereby, conventional rotor design may be supported.

According to an embodiment of the present invention, the method further comprises in particular during or subsequently of any magnet module insertion action: measuring a geometric characteristic of the rotor house; comparing the geometric characteristic with a design shape of the rotor house, in order to determine a quantity indicating a deformation of the rotor house; adapting an order of slots to be filled and/or number of magnet modules to be inserted at a particular slot depending on the quantity such as to counteract any deformation above a threshold.

Thereby, the shape or geometric characteristic of the rotor house may be monitored during the arrangement or assembly process and adaptations of the ordering of the slots and/or the number of modules to be inserted may be performed.

According to an embodiment of the present invention it is provided a method of manufacturing a, in particular outer, rotor of an electrical machine, in particular wind turbine generator, comprising: providing a rotor house; performing a method of arranging permanent magnet modules at the rotor house according to any one of the preceding embodiments.

According to an embodiment of the present invention it is provided a method of manufacturing an electrical machine, in particular wind turbine generator, comprising: providing a stator with stator windings; providing a rotor house; rotationally supporting the rotor house relative to the stator; performing a method of arranging permanent magnet modules at the rotor house according to any one of the preceding embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Figs. 1 and 2 schematically illustrate a method of arranging permanent magnet modules at a rotor house according to an embodiment of the present invention;
Figs. 3 and 4 schematically illustrate a method of arranging permanent magnet modules at a rotor house according to another embodiment of the present invention; and
Figs. 5 and 6 schematically illustrate a method of arranging permanent magnet modules at a rotor house according to still another embodiment of the present invention.

### Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

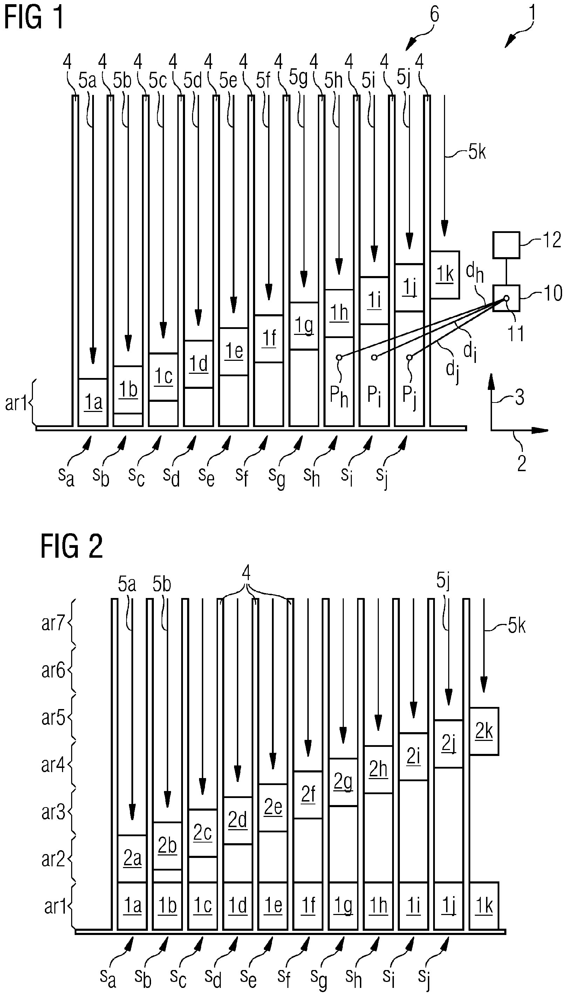

**Figs. 1 and 2** schematically illustrate a rotor 1 in a rolled-up fashion (i.e. straightened) wherein the circumferential direction 2 is illustrated in a horizontal direction in the drawing plane and the axial direction 3 is in the vertical direction. The rotor house 6 extends in the axial direction 3 and comprises axially extending guiding structures 4 to provide plural axial magnet module slots in between the guiding structures 4 labelled as sa, sb, sc, sd, se, sf, sg, sh, si, sj, sk, .... The module slots sa, sb, ... are spaced apart in the circumferential direction 2. Although the rotor house 6 at which the guiding structures 4 are provided thereby forming slots 5a, 5b in between is illustrated in a flat manner, in reality the rotor house 6 and thus also the rotor 1 is a substantially cylindrical rotor.

The arrows 5, in particular arrows 5a, 5b, ..., 5k indicate the temporal order in which the magnet modules 1a, 1b, 1c, ..., 1j, 1k (collectively labelled with ref sign 7) are inserted, wherein a longer arrow 5a, 5b, ..., 5k indicates that the respective magnet module is inserted earlier than a magnet module associated with a shorter arrow 5a, 5b, .... Thereby, by the length of the arrows 5a, 5b, ..., an order of slots is defined according to which magnet modules 1a, 1b, 1c, ... are inserted into the slots 5a, 5b, ...

The insertion may be performed in an axial layer-wise manner or in a slot-wise manner as will be explained below in more detail. The order of slots may have been previously determined in order to avoid or reduce undesired deformation of the rotor house 6.

Figs. 1 and 2 illustrate an embodiment where the insertion is performed in an axial layer-wise manner. Thereby, a first axial range ar1 and at least one further axial range, here, a second axial range ar2 (and furthermore ar3, ar4, ar5, ar6, ar7) is considered and for each those axial ranges ar1, ar2 (and furthermore ar3, ar4, ar5, ar6, ar7) a predetermined number of one or more magnet modules (collectively labelled with reference sign 7) is defined which are to be inserted at each of the slots sa, sb, ..., such that the sum of the predetermined number of one or more magnet modules for all of the first and the at least one further axial ranges is equal to the intended number of magnet modules per slot.

In particular, in the illustrated embodiment, seven axial ranges ar1, ar2, ar3, ar4, ar5, ar6 and ar7 are defined and the predetermined number of one or more magnet modules for each of the axial ranges ar1, ..., ar7 is exactly one. In other embodiments, there may be a number different from one of the predetermined numbers of magnet modules for each or at least one of the axial ranges ar1, ..., ar7. As can be appreciated from Fig. 1 illustrating a first time interval (or first stage) during performing the method, in particular for forming a first layer, first the (single) magnet module 1a is inserted into the slot sa followed by insertion of respective (single) magnet module successively into the slots sb, sc, sd, se, sf, sg, sh, si, sj, ... until all slots around the circumference are inserted or filled with exactly one magnet module 7.

Thus, the order of slots is defined or comprises the characteristics that a slot immediately adjacent to the last slot previously enriched with one (or more) magnet module is enriched next with one or more magnet module. Herein, a slot is considered to be immediately adjacent to another slot if there is no further slot in between. As can for example be seen in Fig. 1, the slots sa, sb are immediately adjacent to each other since there is no other slot in between only a guiding structure 4.

After having filled the first axial range ar1 with magnet modules, the axial range ar2 is also filled with magnet modules (in the order 2a, ..., 2k) to complete a second layer or axial range according to a layer-wise insertion manner. As is appreciated from Fig. 2, the second layer in the second axial range ar2 is started at slot sa, i.e., starts thereby by the same slot at which also the first layer was started. The process then continues with a third, fourth, fifth, sixth and seventh layer in the same manner as the first and second layer.

Fig. 1 also schematically illustrates a measuring apparatus 10, in particular optical measuring apparatus 10 which is configured to measure distances between a reference point 11 and for example regions within the slots in particular indicated as points pj, pi, ph exemplarily. Other embodiments may be configured to measure many more measuring points at substantially all or a subset of the slots in particular also along the axial direction. The measurement apparatus 10 may for example comprise an optical measurement apparatus, such as a ranging equipment (e.g. laser rangefinder) employing laser light for measuring distances dj, di, dh between the reference point 11 and one or more regions or points at the rotor house 6, in particular at mounting areas for mounting the magnet modules.

The measuring arrangement or apparatus 10 may be in communication with a processing section 12 which may process measurement data from the optical measurement equipment 10 and determine a geometry of the rotor house 6. The measured geometry of the rotor house may be compared with a design geometry to determine potential deviations or deformations. Based on those deformations, the manner of insertion may be adapted or changed, in particular the order of slots to be inserted with magnet modules may be adapted or changed. Similar measurement equipment and evaluation equipment may also be employed in the embodiments illustrated in Figs. 2, 3, 4, 5, 6.

E.g., the insertion process may be employed in coordination with the rotor house manufacturing tolerances/eccentricity which are measured so to reverse or reduce their impacts on the unbalanced magnetic forces so then limit any further deformation or larger eccentricity. The proposed techniques or embodiments may be used in combination with position sensors where the insertion can be harmonized based on the rotor house deformation/eccentricity during the insertion process to opposite such impacts, which may lead to reverse/remove these deformations.

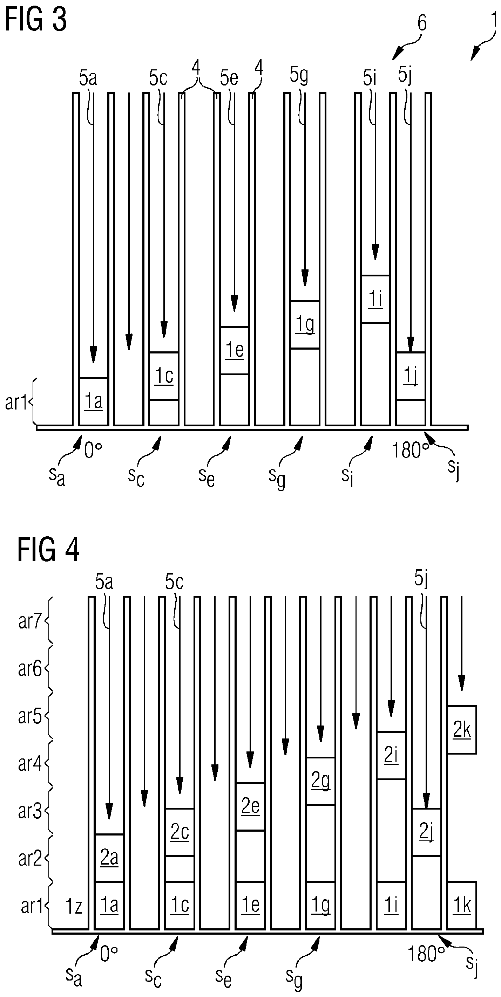

**Figs. 3 and 4** illustrate a further embodiment of inserting magnet modules at a rotor house according to a predetermined order of slots. First, a magnet module 1a is inserted into the slot sa considered to be at a circumferential position of 0°. Thereafter, the slot sj is filled with one module 1j, wherein the slot sj is substantially at 180° apart from the slot sa. Then, a next but one slot relative to the first slot sa, namely the slot sc, is filled with one magnet module 1c. Afterwards, a next but one relative to the last enriched slot (the last enriched slot is sc), i.e., the slot se is inserted with one magnet module 1e and this continues until the slots which have one slot in between are filled with one magnet module, as is illustrated in Fig. 3. Thereby, a first layer in the first axial range ar1 is completed.

Next, as is illustrated in Fig. 4, a next layer is formed by first inserting a magnet module 2a into the first slot sa being considered at position 0°. Following, a module 2j is inserted into the slot sj which is spaced 180° from the first slot sa. Then, further modules are inserted in the slots sc, se, sg, si in the order in analogy to the insertion process for the first layer. Thus, also a second layer in the second axial range ar2 is completed.

Then the process continues in a same manner until all magnet modules intended to be inserted are inserted into the slots sa, sc, se, sg, si, sj. In next method steps, also the remaining slots sb, sd, sf, sh, ... are successively filled with magnet modules similar as the previously filled slots.

Instead of filling the slots sc, se, sg, si, also slots which have a particular angle spacing from the first slot sa or sj may be subsequently filled with magnet modules. Similar as mentioned with respect to Figs. 1 and 2, the number of magnet modules considered to form an axial range or an axial layer may be one or two or three or even a higher number also in the insertion method as illustrated in Figs. 3 and 4.

According to an embodiment of the present invention, also described above (see Fig. 3, 4), the number of modules between one and the total number of modules per pole at a single angle may be inserted (for example 0°). The same number of modules may be inserted at a position 180° from this previous position. This could be a single pole or several neighbouring poles before moving to the diametrically opposite location. Further, the appropriate angle after the initial pole at 0°/180° may be selected or chosen to be for example 90° or 60° or another angle.

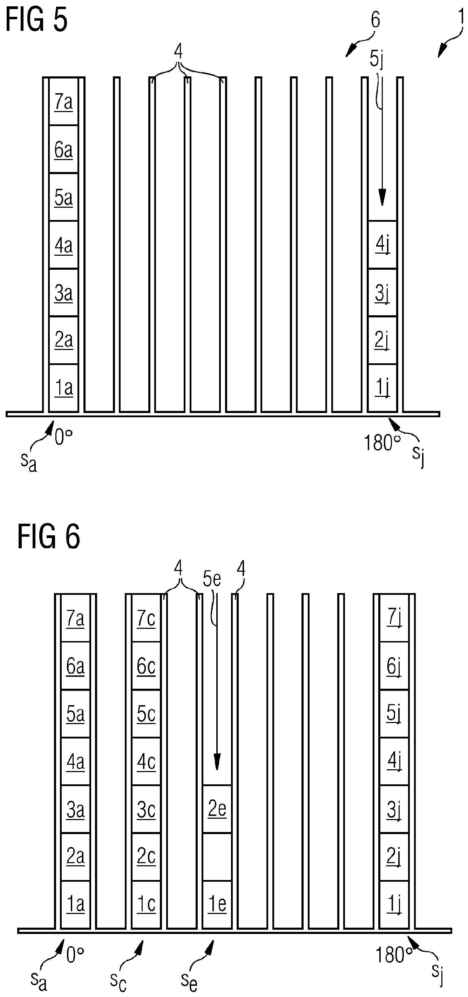

**Figs. 5 and 6** illustrate a magnet module insertion in a slot-wise manner according to an embodiment of the present invention. In a first timespan (or stage) of the method, the total intended number of magnet modules per slot is inserted for example in slot sa representing 0° position. Thereafter, the total intended number of magnet modules (here seven) per slot is- inserted into the slot sj being 180° spaced apart from the first slot sa. Thereafter, also the slots sc, se, sg, si are (successively) filled with the total number of intended magnet modules as is illustrated in Fig. 6 (showing the phase where slot sc has been filled with all modules, slot se is in the process of being filled with all modules).

Afterwards, the remaining slots sb, sd, sf, sh may also be filled with the total intended number of magnet modules.

It should be understood, that the magnet modules are inserted such that a magnetic orientation of the magnet module alternate in the circumferential direction and are the same in each slot.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of arranging permanent magnet modules (7) at a substantially cylindrical, in particular outer, rotor house (6) of an electrical machine, in particular wind turbine generator, the rotor house (6) extending in an axial direction (3) and in a circumferential direction (2) and comprising axially extending guiding structures (4), to provide plural axial magnet module slots (sa,sb,sc,...) spaced apart in the circumferential direction, the method comprising:
inserting the magnet modules (7) successively at the slots (sa,sb,sc,...) in a predetermined order of slots until each slot is occupied with an intended number of magnet modules per slot,
wherein the inserting the magnet modules (7) is performed in an axial layer-wise manner or in a slot-wise manner.

2. Method according to the preceding claim, wherein the predetermined order of slots is previously determined such that inserting the magnet modules (7) affects deformation and/or eccentricity of the rotor house (6) and/or generator at most below a threshold, in particular optionally taking into account shape measurement data to change the order of slots to be filled.

3. Method according to any one of the preceding claims, wherein the inserting the magnet modules (7) is performed in an axial layer-wise manner, comprising:
defining for each of a first axial range (ar1) and at least one further axial range (ar2,...,ar7) a predetermined number of one or more magnet module (7) to be inserted, such that the sum of predetermined number of one or more magnet module for all of the first and the at least one further axial ranges is equal to the intended number of magnet modules per slot;
A) filling the first axial range (ar1) of each slot (sa,sb,...) in the predetermined order of slots with a first predetermined number of one or more magnet module (7);
B) filling a further axial range (ar2) of each slot (sa,sb,sc,...) in the predetermined order with a further predetermined number of one or more magnet module;
C) repeating B) for any remaining axial range (ar3, ..., ar7) as the further axial range.

4. Method according to the preceding claim, wherein the predetermined order comprises that a slot (sb) immediately adjacent to the last slot (sa) previously enriched with one or more magnet module is enriched next with one or more magnet module.

5. Method according to any one of the preceding claims 3 or 4, wherein the predetermined order comprises that filling a further axial range (ar2) is started with a same slot (sa) with which a previous axial range (ar1) has been started.

6. Method according to claim 3, wherein the predetermined order comprises that filling the first axial range (ar1) is performed starting with a first slot (sa) at substantially 0° and continuing with a second slot (sj) at substantially 180°, and/or
then continues with a next but one (sc) relative to the first slot (sa) and further continues with a next but one (se) relative to the last enriched slot (sc) in an iterative fashion, and/or
then continues with a next one (sb) relative to the first slot and further continues with a next one (sd) relative to the last enriched slot (sb) in an iterative fashion.

7. Method according to claim 3, wherein the predetermined order comprises that filling the first axial range (ar1) is performed staring with a first slot (sa) at substantially 0° and continues with a second slot (sj) at substantially 180°, and/or then continues with a further slot at one of substantially 90° and 270° and 60° and 120° and 240° and 45° and 0° and 135°.

8. Method according to any of the preceding claims 3 to 7, wherein the first and/or the further predetermined number of modules is one or two or three or four or more.

9. Method according to any of the preceding claims 3 to 8, wherein the first and each of the at least one further predetermined number of modules is one.

10. Method according to the claim 2, wherein the inserting the magnet modules (7) is performed in a slot-wise manner, comprising:
inserting the intended number of magnet modules (1a,2a,...,7a) per slot into/at a first slot (sa);
inserting the intended number of magnet modules (1j,2j,...,7j) per slot into/at a second slot (sj) spaced apart substantially 180° from the first slot;
inserting the intended number of magnet modules per slot into/at a next but one (sc) relative to the first slot and further continuing with a next but one relative to the last enriched slot in an iterative fashion;
inserting the intended number of magnet modules per slot into/at a next one (sb) relative to the first slot (sa) and further continuing with a next one relative to the last enriched slot in an iterative fashion.

11. Method according to any one of the preceding claims, wherein the magnet modules (1a,..,7j) are inserted such that a magnetic orientation of the magnet modules alternate in the circumferential direction and are same in each slot (in the axial direction).

12. Method according to any one of the preceding claims, further comprising, in particular during or subsequently of any magnet module insertion action:
measuring a geometric characteristic of the rotor house (6);
comparing the geometric characteristic with a design shape of the rotor house, in order to determine a quantity indicating a deformation of the rotor house;
adapting an order of slots to be filled and/or number of magnet modules to be inserted at a particular slot depending on the quantity such as to counteract any deformation above a threshold.

13. Method of manufacturing a, in particular outer, rotor (1) of an electrical machine, in particular wind turbine generator, comprising:
providing a rotor house (6);
performing a method of arranging permanent magnet modules (7) at the rotor house (6) according to any one of the preceding claims.

14. Method of manufacturing an electrical machine, in particular wind turbine generator, comprising:
providing a stator with stator windings;
providing a rotor house (6);
rotationally supporting the rotor house (6) relative to the stator;
performing a method of arranging permanent magnet modules (7) at the rotor house (6) according to any one of the preceding claims 1 to 12.
